# EUROPÄISCHE PATENTANMELDUNG

(11) **EP 1 187 280 A2**
(43) Veröffentlichungstag der Anmeldung: **13.03.2002**
(21) Anmeldenummer: 01119145.9
(22) Anmeldetag: 08.08.2001
(51) Int. Cl.: H02G 3/04

(54) **Brandschutzverkleidung für eine Kabelführungseinrichtung**

(30) Priorität: 02.09.2000 DE 10043356
(71) Anmelder: Thomas, Werner, 82069 Hohenschäftlarn (DE)
(72) Erfinder: Thomas, Werner, 82069 Hohenschäftlarn (DE)
(74) Vertreter: Kirschner, Klaus Dieter, Dipl.-Phys.

(57) **Zusammenfassung**

Eine Brandschutzverkleidung für eine Kabelführungseinrichtung, insbesondere ein Kabelkanal oder eine Kabelrinne, umfasst einen Unterteil (10), der wenigstens auf seiner Innenseite mit Brandschutzmaterial verkleidet ist und eine lichte Weite hat, die größer als die Außenabmessungen der Kabelführungseinrichtung (2) ist, einen Deckelteil (12) zum Abdekken des Unterteils, und eine Verbindungseinrichtung (14, 16) zwischen dem Unterteil und dem Deckelteil. Als Brandschutzmaterial Platten (18, 20) auf der Innenseite des Unterteils und des Deckelteils vorgesehen. Die Brandschutzverkleidung kann auch aus einem Verbundwerkstoff gebildet sein, der aus einem nichtmetallischen Brandschutzmaterial besteht, das mit einer Metalleinlage verstärkt ist.

## Beschreibung

Die Erfindung betrifft eine Brandschutzverkleidung für eine Kabelführungseinrichtung.

Kabelkanalsysteme sind in unterschiedlicher Weise aus dem Stand der Technik bekannt. Sie können aus verschiedenen Materialien, wie Kunststoffen oder Metallen bestehen. Bei höheren Belastungen werden dabei überwiegend Elemente aus Metall zum Einsatz kommen. Die Kabelkanalsysteme bestehen aus Systemelementen, wie geraden Stücken, Bogenstücken, Kreuzungen, Abzweigstücken, Endstücken und dergleichen und aus Vorrichtungen zum Befestigen dieser Elemente an Wänden und Decken, um mit diesen Elementen ein System aus Kabelkanälen, das für den speziellen Anwendungsfall geeignet ist, zusammenzusetzen. Vorzugsweise werden als Systemelemente Metallprofile, die aus Gründen der Gewichts- und Materialersparnis eine Vielzahl von Öffnungen aufweisen, verwendet.

Solche Kabelkanäle bieten im Brandfall keinen Brandschutz für die darin geführten Kabel, da das häufig verwendete Metall ein rechter Wärmeleiter ist und da die Kabel nicht von der Umgebung abgeschlossen sind, weil in den Metallprofilen gewöhnlich Löcher insbesondere zur Gewichtsreduzierung vorgesehen sind. In feuergefährdeten Räumen werden die Kabelkanäle daher zusätzlich mit einer Brandschutzverkleidung aus Brandschutzplatten umbaut, die aus einem feuerfesten oder feuerhemmenden Material besteht. Diese Verkleidung wird, nachdem das Kabelkanalsystem aus seinen einzelnen Systemteilen zusammengebaut und befestigt wurde, um dieses System außen herum angebracht. Dies ist ein mühsames und sehr arbeitsaufwendiges Verfahren.

In der Praxis wird das Kabelkanalsystem von einer Elektrofirma installiert, und die Brandschutzverkleidung wird von einer Brandschutzfachfirma nach der Verlegung der Elektrokabel durchgeführt, so daß tatsächlich zwei Fachfirmen beteiligt sind, um den Kabelkanal zu installieren. Dies ist nicht nur kostspielig, sondern gibt auch Probleme bei der Gewährleistungsfrage, weil zwei Firmen an der Erstellung des Brandschutz-Kabelsystems beteiligt sind

Aufgabe der vorliegenden Erfindung ist es daher, eine Brandschutzverkleidung für eine Kabelführungseinrichtung anzugeben, der, um die erforderlichen Brandschutznormen zu erfüllen, in einfacher und kostengünstiger Weise ausgehend von einem nichtbrandgeschützten Kabelkanal aufgebaut werden kann.

Dazu ist die erfindungsgemäße Brandschutzverkleidung für eine Kabelführungseinrichtung, insbesondere ein Kabelkanal oder eine Kabelrinne, gekennzeichnet durch einen Unterteil, der wenigstens auf seiner Innenseite mit Brandschutzmaterial verkleidet ist und eine lichte Weite hat, die größer als die Außenabmessungen der Kabelführungseinrichtung ist, durch einen Deckelteil zum Abdecken des Unterteils, und durch eine Verbindungseinrichtung zwischen dem Unterteil und dem Deckelteil.

Bei der erfindungsgemäßen Brandschutzverkleidung handelt es sich in vorteilhafter Weise um ein ganzheitliches de- und remontierbares System, welches so ausgelegt werden kann, daß es der DIN-Norm 4102 entspricht, so daß derartige Kabelkanalsysteme normgerecht ausgeführt werden können. Ein weiterer Vorteil besteht darin, daß das Kabelkanalsystem nicht notwendigerweise von einer Fachfirma installiert werden muß, da die Bauteile vorgefertigt werden können.

Es ist weiterhin vorteilhaft, daß ein brandgeschützter Kabelkanal nach der Erfindung auf einfache Weise dadurch hergestellt werden kann, daß eine Brandschutzverkleidung bestehend aus vorgefertigten Unterteilen und vorgefertigten Deckelteilen über die vorhandene Kabelführungseinrichtung, d.h. einen Kabelkanal oder eine Kabelrinne, montiert wird.

Eine vorteilhafte Ausgestaltung der Brandschutzverkleidung ist dadurch gekennzeichnet, daß Platten aus Brandschutzmaterial auf der Innenseite des Unterteils und des Deckelteils vorgesehen sind. Die Elemente der Brandschutzverkleidung, das heißt, die Verkleidungselemente, können bei diesem Ausführungsbeispiel auf einfache Weise dadurch vorgefertigt werden, daß der Unterteil auf seiner Innenseite mit Platten aus Brandschutzmaterial verkleidet wird, wobei die Platten als solche fertig bezogen werden können. Mit anderen Worten können Unterteil und Deckelteil "trocken" gefertigt werden, wobei der Unterteil nicht in Bäder eingetaucht oder durch einen sonstigen Naßverarbeitungsschritt beschichtet werden muß.

Eine vorteilhafte Ausgestaltung der erfindungsgemäßen Brandschutzverkleidung ist dadurch gekennzeichnet, daß auch die Außenseiten des Unterteils und des Deckelteils mit Brandschutzmaterial versehen sind. Damit werden in vorteilhafter Weise die Elemente der Brandschutzverkleidung auch von außen gegen Hitzeeinwirkung geschützt.

Eine vorteilhafte Ausgestaltung der erfindungsgemäßen Brandschutzverkleidung ist dadurch gekennzeichnet, daß der Kabelkanal aus einem Verbundwerkstoff gebildet ist, der aus einem nichtmetallischen Brandschutzmaterial besteht, das mit einer Metalleinlage verstärkt ist. Im Fall des Einwirkens von Hitze und/oder Feuer schützt das Brandschutzmaterial die Systemelemente des Kabelkanals und die im Kabelkanalsystem geführten Kabel vor der einwirkenden Hitze und/oder den Flammen, während die Metalleinlage für die mechanische Festigkeit des Kabelkanals sorgt. Der Kabelkanal kommt somit ohne eine gesonderte Umhüllung im Falle eines Brandes oder einer anderweitigen Hitzeeinwirkung aus und bietet einen zuverlässigen Schutz der in den Kabelkanal geführten Kabel.

Durch die Ausführung des erfindungsgemäßen Kabelkanals mit Verbundmaterial ergibt sich auch eine große Platzeinsparung gegenüber dem früheren System, bei dem eine Kabelrinne mit Brandschutzmaterialplatten umbaut wurde. Der Platzbedarf eines solchen Systems stellt jedoch ein Problem dar, wenn man bedenkt, daß derartige Kabelführungseinrichtungen oft in einem beschränkten Raum untergebracht werden müssen. Auch ist die einfache De- und Remontage ein großer Vorteil im Hinblick auf Kostenersparnis bei der Montage, die bis zu 40 % der Kosten betragen kann. Was die Sicherheitsfrage beim Nachbelegen eines solchen Kabelkanals betrifft, so wird der Kabelkanal automatisch nach dem Nachbelegen wieder durch Auflegen des Deckels geschlossen (der Deckel ist bereits vorhanden), so daß der volle Brandschutz wieder hergestellt wird.

Eine vorteilhafte Ausgestaltung der erfindungsgemäßen Brandschutzverkleidung ist dadurch gekennzeichnet, daß das Brandschutzmaterial aus einem Kunststoff besteht, der unter Wärmeeinwirkung eine wärmeisolierende Dämmschicht ausbildet. Derartige Kunststoffe sind im Brandschutz bekannt und haben sich im Einsatz bewährt. Der Aufschäum-Effekt kann bewirken, daß die isolierende Schaumschicht bis zu der 40-fachen Dicke wie die ursprüngliche Materialstärke aufweist.

Eine vorteilhafte Ausgestaltung der erfindungsgemäßen Brandschutzverkleidung ist dadurch gekennzeichnet, daß der Kunststoff im Brandfall unter Wärmeeinwirkung aufschäumt. Die dabei entstehende Schaumschicht ist viel dicker als die ursprüngliche Schicht und sie schließt auch eine Vielzahl von Luftbläschen und Hohlräumen ein, so daß sie sehr gut wärmeisolierend wirkt.

Eine vorteilhafte Ausgestaltung der erfindungsgemäßen Brandschutzverkleidung ist dadurch gekennzeichnet, daß das Brandschutzmaterial eine oder mehrere Verbindungen aus der Gruppe bestehend aus (2-chlorethyl-1-methylethyl)-phosphat, (2-chlorethyl)-phosphat, 2-chlor-acetamid und Natriumfluorid enthält. Dies ist eine bewährte Zusammensetzung für das Brandschutzmaterial, es können jedoch auch andere, bekannte Materialien eingesetzt werden, wie sie derzeit im Brandschutz verwendet werden.

Eine vorteilhafte Ausgestaltung der erfindungsgemäßen Brandschutzverkleidung ist dadurch gekennzeichnet, daß das Brandschutzmaterial im Brandfall unter Wärmeeinwirkung kristallisiert. Auch dieses Merkmal eines Brandschutzmaterials ist im Brandfall nützlich, weil eine zusätzliche Dämmung geschaffen wird.

Eine vorteilhafte Ausgestaltung der erfindungsgemäßen Brandschutzverkleidung ist dadurch gekennzeichnet, daß das Brandschutzmaterial im Brandfall unter Wärmeeinwirkung chemisch gebundenes Wasser zur Kühlung freigibt. Die zusätzliche Wasserkühlung trägt in vorteilhafter Weise zur Brandeindämmung bei.

Eine vorteilhafte Ausgestaltung der erfindungsgemäßen Brandschutzverkleidung ist dadurch gekennzeichnet, daß die Metalleinlage aus mit Öffnungen versehenem Metallblech besteht. Eine derartige Metalleinlage hat einerseits die entsprechende Stabilität, um daraus Unterteile und Deckel zu formen, und das Gewicht der Metalleinlage wird durch die Öffnungen verringert.

Eine vorteilhafte Ausgestaltung der erfindungsgemäßen Brandschutzverkleidung ist dadurch gekennzeichnet, daß die Öffnungen gestanzt sind. Diese Metalleinlage kann in vorteilhafter Weise so hergestellt werden, wie bisherige Kabelrinnen. Dabei ist jedoch zu beachten, daß, da es sich bei dem erfindungsgemäßen Kabelkanal um ein Verbundmaterial handelt, die Güte des Metalls gering sein kann, weil Rost und dergleichen keine Rolle spielt aufgrund der Tatsache, daß das Metall vollständig von dem Kunststoff umgeben ist, das heißt, daß es sich eben um ein echtes Verbundmaterial handelt.

Eine vorteilhafte Ausgestaltung der erfindungsgemäßen Brandschutzverkleidung ist dadurch gekennzeichnet, daß die Öffnungen durch Ankerben und Strecken eines Metallblechs gefertigt sind. Die Herstellung von Öffnungen in einem Metallblech durch Ankerben und Strecken ist an sich aus der DE 25 49 072 B2 bekannt. Das nach diesem bekannten Verfahren hergestellte Metallblech mit Durchbrüchen eignet sich als Metalleinlage bei dem Verbundmaterial für die erfindungsgemäßen Kabelkanäle insbesondere deshalb, weil durch die Form der durch Ankerben und Strecken erzeugten Durchbrüche eine sichere Verbindung der inneren und äußeren Kunststoffschicht auf den beiden Seiten der Metalleinlage erfolgen kann, so daß sich der Kunststoff nicht von der Metalleinlage lösen kann.

Eine vorteilhafte Ausgestaltung der erfindungsgemäßen Brandschutzverkleidung ist dadurch gekennzeichnet, daß die Öffnungen des Metallblechs durch das Brandschutzmaterial verschlossen sind. Damit ist im Brandfall sichergestellt, daß von Anfang an keine Dämpfe aus dem Kabelkanal austreten können.

Eine vorteilhafte Ausgestaltung der erfindungsgemäßen Brandschutzverkleidung ist dadurch gekennzeichnet, daß das Brandschutzmaterial ein unter Wärmeeinwirkung aufschäumender Kunststoff ist, und daß die Öffnungen durch das Brandschutzmaterial nicht geschlossen jedoch so dimensioniert sind, daß sie beim Aufschäumen des Kunststoffs verschlossen werden. Aus Gründen der besseren Wärmeableitung, die beispielsweise durch bei der Belastung warm werdende Kabel erzeugt wird, aus dem Kabelkanal und für einen besseren Einblick in den Kabelkanal von außen kann es jedoch wünschenswert sein, daß die Öffnungen im Kabelkanal erhalten bleiben. Die Öffnungen in dem Kabelkanal können auch die in der Praxis oft verwendeten Belüftungssysteme (Brandschutzsteine, Belüftungsbox) ersetzen, so daß diese zusätzlichen Maßnahmen in vorteilhafter Weise entfallen können. Das Verbundmaterial wird dann so gefertigt, daß der Großteil der Öffnungen nicht durch das Brandschutzmaterial verschlossen ist. Im Falle der Einwirkung von Hitze und/oder Feuer wird durch das Aufschäumen und Aufquellen des Brandschutzmaterials dennoch ein zuverlässiges Schließen dieser Öffnungen und ein Rundum-Brandschutz erreicht.

Eine vorteilhafte Ausgestaltung der erfindungsgemäßen Brandschutzverkleidung ist dadurch gekennzeichnet, daß das Brandschutzmaterial auf die Metalleinlage aufgespritzt oder durch Tauchen aufgebracht ist. Auf diese Weise ist der Verbundwerkstoff aus Metalleinlage und Kunststoffbeschichtung zuverlässig und mit geringem Aufwand herzustellen.

Eine vorteilhafte Ausgestaltung der erfindungsgemäßen Brandschutzverkleidung ist dadurch gekennzeichnet, daß das Brandschutzmaterial eine Dicke von bis zu einigen Millimetern aufweist. Die Dicke des Brandschutzmaterials richtet sich selbstverständlich auch nach dem verwendeten Material und der gewünschten, klassifizierten Feuerwiderstandsdauer, beispielsweise 30, 60 oder 90 Minuten. Da die Schichtdicke unter dem Gesichtspunkt der Konstruktion keine entscheidende Rolle spielt, kann die Schicht ohne Probleme in der gewünschten Schichtdicke hergestellt werden.

Eine vorteilhafte Ausgestaltung der erfindungsgemäßen Brandschutzverkleidung ist dadurch gekennzeichnet, daß die Verbindungseinrichtung zwischen dem Unterteil und der Kabelführungseinrichtung und zwischen dem Unterteil und dem Deckelteil federnd einrastende, lösbare Federelemente aufweist. Dabei ergibt sich der Vorteil, daß die Verkleidungselemente an der Kabelführungseinrichtung angebracht werden können, indem zunächst der Unterteil auf die Kabelrinne aufgerastet und dann der Deckel auf den Unterteil aufgerastet wird, so daß keine Schrauben oder sonstigen Befestigungsmittel mehr erforderlich sind und noch montiert werden müssen.

Eine vorteilhafte Ausgestaltung der erfindungsgemäßen Brandschutzverkleidung ist dadurch gekennzeichnet, daß die Federelemente einstückig mit dem Blechprofil des Unterteils bzw. des Deckelteils ausgebildet ist. Damit entfallen in vorteilhafter Weise einige Fertigungsschritte beim Konfektionieren des Unterteils und des Deckelteils.

Eine vorteilhafte Ausgestaltung der erfindungsgemäßen Brandschutzverkleidung ist dadurch gekennzeichnet, daß die Federelemente mit dem Blechprofil des Unterteils bzw. des Deckelteils verbunden sind. Dies hat den Vorteil, daß das Material für den Unterteil bzw. den Deckelteil einerseits und das Material für die Federelemente andererseits jeweils besser auf den jeweiligen Zweck abgestimmt werden können.

Eine vorteilhafte Ausgestaltung der erfindungsgemäßen Brandschutzverkleidung ist dadurch gekennzeichnet, daß das Federelement zum Verbinden des Unterteils mit der Kabelführungseinrichtung an der Innenseite des Unterteils derart angeordnet ist, daß es beim Aufsetzen des Unterteils auf die Kabelführungseinrichtung nach außen auslenkbar und beim Erreichen einer Endstellung des Unterteils gegenüber der Kabelführungseinrichtung nach innen einrastbar ist. Wenn ein derartiges Federelement vorgesehen ist, können Kabelrinnen oder Kabelkanäle unabhängig davon bestückt werden, ob der obere Rand der Kabelrinne nach außen oder nach innen umgebogen ist. In jedem Falle ist sichergestellt, daß das Federelement über der Kabelrinne oder dem Kabelkanal einrastet.

Eine vorteilhafte Ausgestaltung der erfindungsgemäßen Brandschutzverkleidung ist dadurch gekennzeichnet, daß das Federelement an einem oberen Ende mit dem Unterteil verbundene, von dem Verbindungspunkt nach innen verlaufende und am anderen Ende nach außen verlaufende Federzunge ist. Damit ist in vorteilhafter Weise ein einwandfreies Funktionieren des Federelementes gesichert.

Eine vorteilhafte Ausgestaltung der erfindungsgemäßen Brandschutzverkleidung ist dadurch gekennzeichnet, daß das Federelement zum Verbinden des Deckelteils mit dem Unterteil an der Innenseite des Unterteils derart angeordnet ist, daß es beim Aufsetzen des Dekkelteils auf den Unterteil nach außen auslenkbar und beim Erreichen einer Endstellung des Deckelteils gegenüber dem Unterteil nach innen einrastbar ist. Damit ist in vorteilhafter Weise ein einwandfreies Funktionieren des Federelementes gesichert.

Eine vorteilhafte Ausgestaltung der erfindungsgemäßen Brandschutzverkleidung ist dadurch gekennzeichnet, daß das Federelement eine an einem oberen Ende mit dem Unterteil verbundene, von dem Verbindungspunkt nach innen verlaufende und am anderen Ende nach außen verlaufende Federzunge ist. Damit ist in vorteilhafter Weise ein einwandfreies Funktionieren des Federelementes gesichert.

Eine vorteilhafte Ausgestaltung der erfindungsgemäßen Brandschutzverkleidung ist dadurch gekennzeichnet, daß ein weiteres Federelement an dem Unterteil zur Fixierung des Deckelteils in seiner Endlage vorgesehen ist, wobei der Deckel in seiner Endlage noch zusätzlich gegenüber dem Unterteil fixiert wird.

Eine vorteilhafte Ausgestaltung der erfindungsgemäßen Brandschutzverkleidung ist dadurch gekennzeichnet, daß die Federelemente auf einer an dem Unterteil befestigten Grundplatte mit Öffnungen angeordnet sind, die die Auslenkung der Federelemente gestatten. Die Grundplatte bildet somit mit den Federelementen eine Einheit und kann als solche an dem Unterteil befestigt werden. Dies spart Teile ein und gewährleistet eine sichere Verbindung zwischen den Federelementen und dem Unterteil.

Eine vorteilhafte Ausgestaltung der erfindungsgemäßen Brandschutzverkleidung ist dadurch gekennzeichnet, daß die Verbindungseinrichtung Kappenschlösser zwischen dem Deckelteil und dem Unterteil aufweisen, die eine sichere Verriegelung zwischen Unterteilen und Deckelteil gewährleisten.

Eine vorteilhafte Ausgestaltung der erfindungsgemäßen Brandschutzverkleidung ist dadurch gekennzeichnet, daß die Verbindungseinrichtung eine Manschette umfaßt, die an einer Stoßstelle zwischen Kabelführungseinrichtungen angeordnet ist. Die Manschette sorgt in vorteilhafter Weise nicht nur für die Abdeckung der Stoßstelle zwischen Kabelführungseinrichtungen, sondern auch dazu, den Unterteil mit dem Oberteil der Brandschutzverkleidung zu verbinden, so daß keine weiteren Verbindungseinrichtungen zwischen diesen Teilen mehr erforderlich sind.

Eine vorteilhafte Ausgestaltung der erfindungsgemäßen Brandschutzverkleidung ist dadurch gekennzeichnet, daß die Manschette einen Manschettendeckel und einen Manschettenunterteil umfaßt, und daß zwei Kappenschlösser vorzugsweise paarweise zur Verbindung von Manschettendeckel und Manschettenunterteil seitlich an der Manschette angeordnet sind, was zu einer symmetrischen und sicheren Verbindung der beiden Teile führt.

Eine vorteilhafte Ausgestaltung der erfindungsgemäßen Brandschutzverkleidung ist dadurch gekennzeichnet, daß die Manschette aus Blech oder Verbundmaterial besteht, so daß auch an der Verbindungsstelle zwischen Kabelführungseinrichtung ein ausreichender Brandschutz vorhanden ist.

Insgesamt liefert die vorliegende Erfindung einen Kabelkanal, der einen zuverlässigen Schutz des Systems selbst und der im System geführten Kabel gegenüber der Einwirkung von Feuer und von Hitze gewährleistet und zwar in zweierlei Hinsicht. Zum einen werden die Kabel gegen einen Funktionsausfall durch eine von aussen einwirkenden Brandbeanspruchung geschützt. Zum anderen wird die Umgebung gegen einen im Kanal, beispielsweise durch einen Kurzschluss, entstehenden Brand geschützt.

Die einzelnen Systemelemente entsprechen in ihren Abmessungen und Ausgestaltungen im wesentlichen den aus üblichen Kabelkanalsystemen bekannten Systemelementen und können deswegen ebenso wie diese leicht vorgefertigt und dann einfach verlegt werden. Außerdem sind die Elemente relativ handlich, da das Brandschutzmaterial eine relativ geringe Dicke aufweist und erst durch die chemische Reaktion im Brandfall eine voluminösere Dämmschicht ausbildet. Somit bietet die Erfindung ein leicht zu verlegendes, kostengünstiges, flexibles Kabelkanalsystem, das nach dem Aufrüsten einen guten, DIN-gerechten Brandschutz gewährleistet.

Ausführungsbeispiele der Erfindung werden nun anhand der beigefügten Zeichnungen beschrieben. Es zeigen:
Fig. 1 eine schematische Explosionsdarstellung im Schnitt durch einen Kabelkanal mit der erfindungsgemäßen Brandschutzverkleidung;
Fig. 2 eine schematische Darstellung im Schnitt von einem weiteren Ausführungsbeispiel des Unterteils der Brandschutzverkleidung;
Fig. 3 einen Schnitt durch die Anordnung von Fig. 1 im zusammengebauten Zustand;
Fig. 4 eine schematische Darstellung einer anderen Ausführungsform des Unterteils der Brandschutzverkleidung;
Fig. 5 eine weitere Ausführungsform der erfindungsgemäßen Brandschutzverkleidung im Schnitt;
Fig. 6 eine vergrößerte Darstellung einer Verbindung mit Federelementen zwischen Unterteil und Deckelteil bei den Ausführungsbeispielen gemäß Figur 5;
Fig. 7 eine perspektivische Darstellung der Grundplatte mit den Federelementen;
Fig. 8 eine weitere Ausführungsform der erfindungsgemäßen Brandschutzverkleidung im Schnitt;
Fig. 9 eine weitere Ausführungsform der erfindungsgemäßen Brandschutzverkleidung für einen Kabelkanal mit Deckel;
Fig. 10 eine weitere Ausführungsform der erfindungsgemäßen Brandschutzverkleidung im Schnitt, wobei die Brandschutzverkleidung durch einen Oberteil und einen Deckelteil aus Verbundmaterial gebildet ist; und
Fig. 11 eine Seitenansicht der Brandschutzverkleidung von Fig. 10.

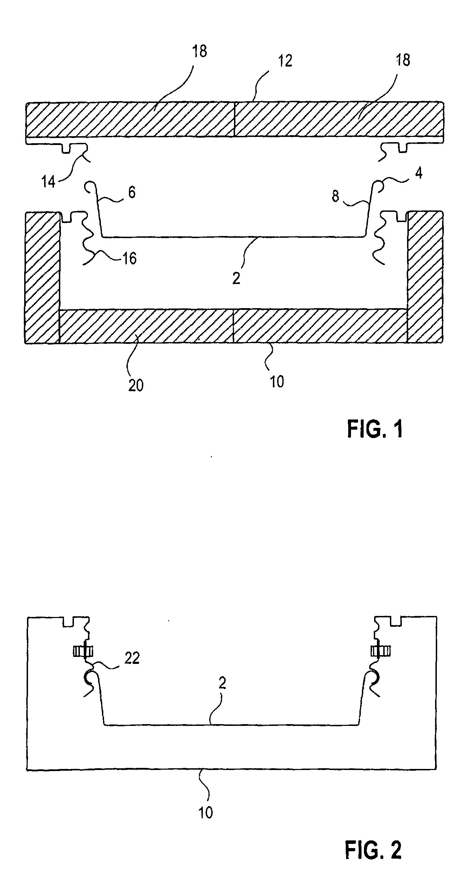

In Fig. 1 ist eine Kabelrinne 2 mit nach außen umgebogenem Rand 4 und Seitenwänden 6, 8 gezeigt. Eine derartige Kabelrinne 2 wird erfindungsgemäß dadurch mit einem Brandschutz versehen, das einen Unterteil 10, das eine lichte Weite V, W hat, die größer als die Außenabmessungen der Kabelrinne 2 ist, von unten (Blickrichtung wie in Fig. 1) über die Kabelrinne geschoben wird. Ein Deckel 12 wird dann von oben auf den Unterteil aufgesetzt und durch ein Federelement 14 mit einem Federelement 16 an dem Unterteil verrastet. Das Federelement 14 ist so geformt, daß es in eine entsprechende Ausbuchtung des Federelementes 16 einrastet, wenn das Federelement 16 an dem nach außen gebogenen oberen Rand 4 der Rinne 2 eingerastet ist. Das Federelement ist mit einer entsprechenden Ausbuchtung versehen, die sich mit dem nach außen gebogenen Rand 4 der Kabelrinne 2 verrastet. Auf der Innenseite sind der Unterteil 10 und der Deckelteil 12 mit Brandschutzplatten 18, 20 verkleidet.

Fig. 2 zeigt ein anderes Ausführungsbeispiel für den Unterteil, wobei das Federelement 22 an dem oberen Rand des Unterteils 10 befestigt ist.

Fig .3 zeigt die Ausführungsform von Fig. 1 im zusammengebauten Zustand, in dem der Unterteil 10 mit der Kabelrinne 2 über das Federelement 16 und der Deckelteil 12 mit dem Unterteil 10 über das Federelement 14 verrastet ist.

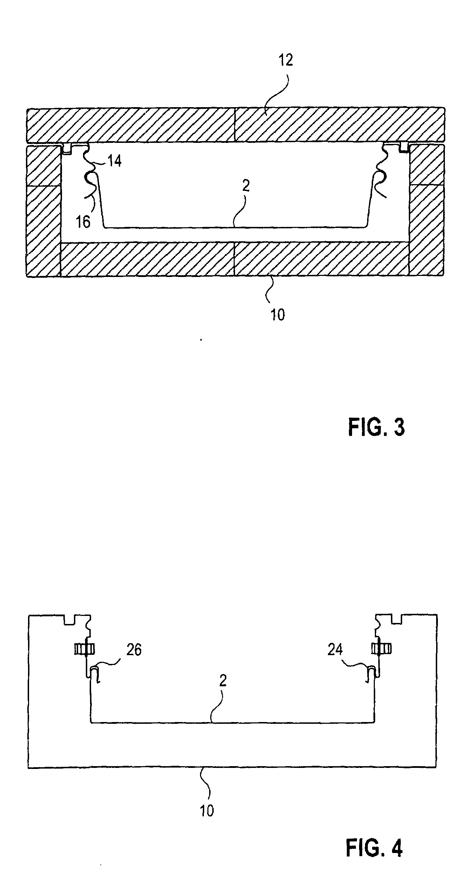

Fig. 4 zeigt ein Beispiel, bei dem die Kabelrinne 2 mit einem nach innen gebogenen Rand 24 versehen ist. In diesem Fall kann das Federelement 26, welches an dem Unterteil 10 befestigt ist, den nach innen gebogenen oberen Rand der Kabelrinne nach innen übergreifen.

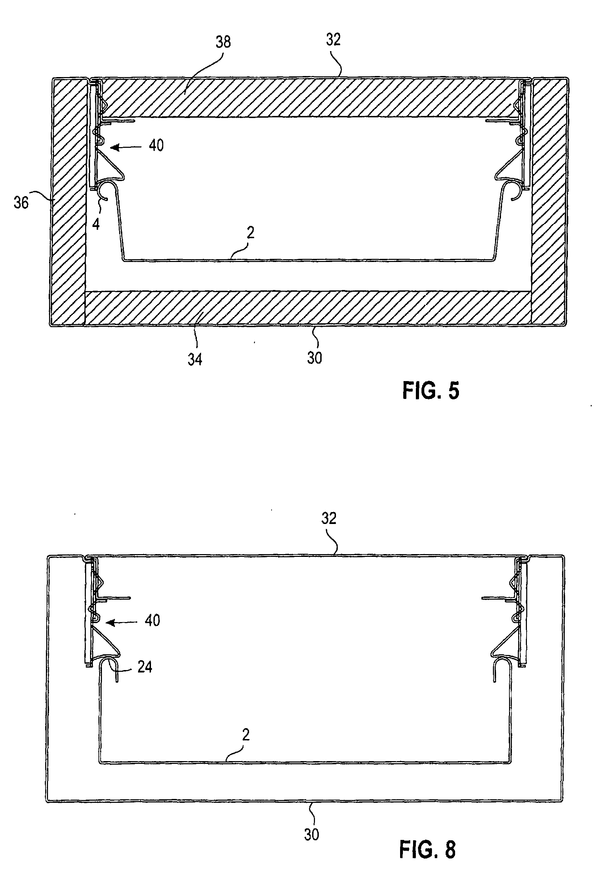

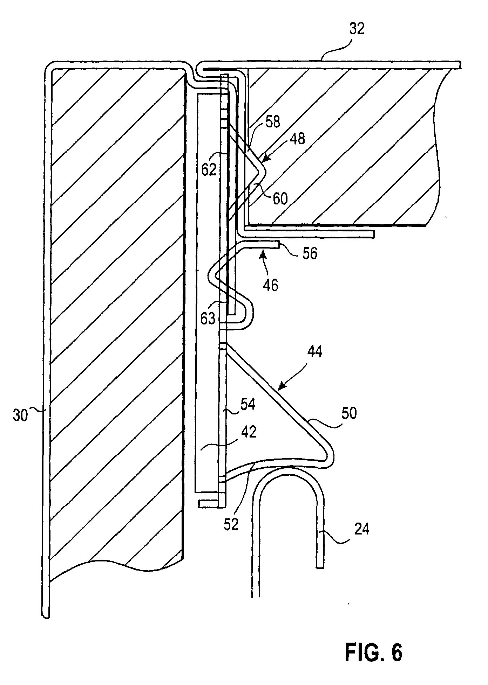

Fig. 5 zeigt ein weiteres Ausführungsbeispiel der erfindungsgemäßen Brandschutzverkleidung für eine Kabelrinne 2 mit einem Unterteil 30 und einem Deckelteil 32. Unterteil 30 und Deckelteil 32 sind wiederum mit Platten 34, 36, 38 ausgestattet. Der Unterteil 30 und der Deckelteil 32 sind über eine Feder-Verbindungseinrichtung 40 miteinander verbunden, die im Detail in Fig. 6 dargestellt ist. Im übrigen ist der obere Rand der Kabelrinne 2 bei dem Ausführungsbeispiel von Fig. 5 nach außen gebogen. Im Unterschied dazu ist bei dem Ausführungsbeispiel der obere Rand 24 der Kabelrinne 2 nach innen gebogen. Wie aus den Figuren 5 und 8, 9 zu ersehen ist, ist die Feder-Verbindungseinrichtung 40 für beide Typen von Kabelrinnen gleichermaßen verwendbar.

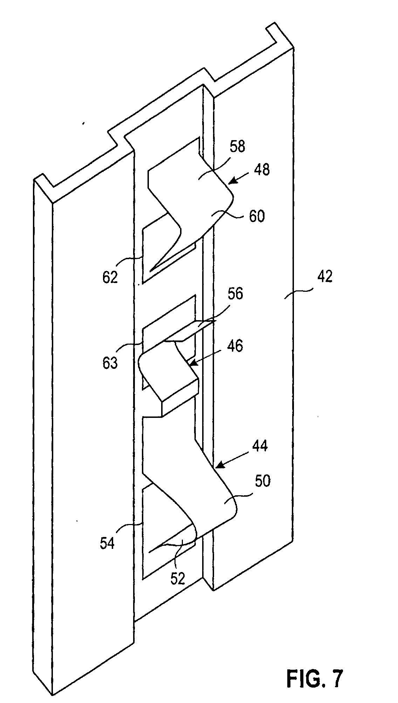

Die Feder-Verbindungseinrichtung 40 ist in den Figuren 6 und 7 im Detail darstellt. Sie weist eine Grundplatte 42 mit drei Federelementen 44, 46, 48 auf. Das Federelement 44 ist an einem oberen Ende mit dem Unterteil 30 über die Grundplatte 42 verbunden, verläuft in einem Abschnitt 50 nach innen und ist am anderen Ende in einem Abschnitt 52 nach außen gebogen. Unter dem Federelement 44 ist eine Öffnung 54 in der Grundplatte 42 vorgesehen, durch die das Federelement mit seinem Abschnitt 52 hindurchgreifen kann. Somit kann das Federelement 44 nach außen (links in Fig. 6) ausweichen, wenn der Unterteil auf die Kabelrinne 2 aufgesetzt wird. Wenn der Unterteil 30 seine Endlage an der Kabelrinne 2 erreicht hat, schnappt das Federelement 44 wieder nach innen und hält damit den Unterteil 30 auf der Kabelrinne 2. Das zweite Federelement 46 ist S-förmig ausgebildet und an seinem unteren Ende mit der Grundplatte 42 verbunden, und das obere Ende 56 dient dazu, den Deckel 32 abzustützen, wenn er auf den Unterteil aufgesetzt ist. Unter dem Federelement 46 ist eine Öffnung 63 in der Grundplatte 42 vorgesehen, die eine Ausweichbewegung des Federelementes 48 gestattet, wenn der Deckelteil 32 aufgesetzt wird. Das Federelement 48 ist wiederum an einem oberen Ende über die Grundplatte 42 mit dem Unterteil 30 verbunden, verläuft von dem Verbindungspunkt aus in einem Abschnitt 58 nach innen und am anderen Ende in einem Abschnitt 60 nach außen. Unter dem Federelement 48 ist eine Öffnung 62 in der Grundplatte 42 vorgesehen, die eine Ausweichbewegung des Federelementes 48 gestattet, wenn der Deckelteil 32 aufgesetzt wird.

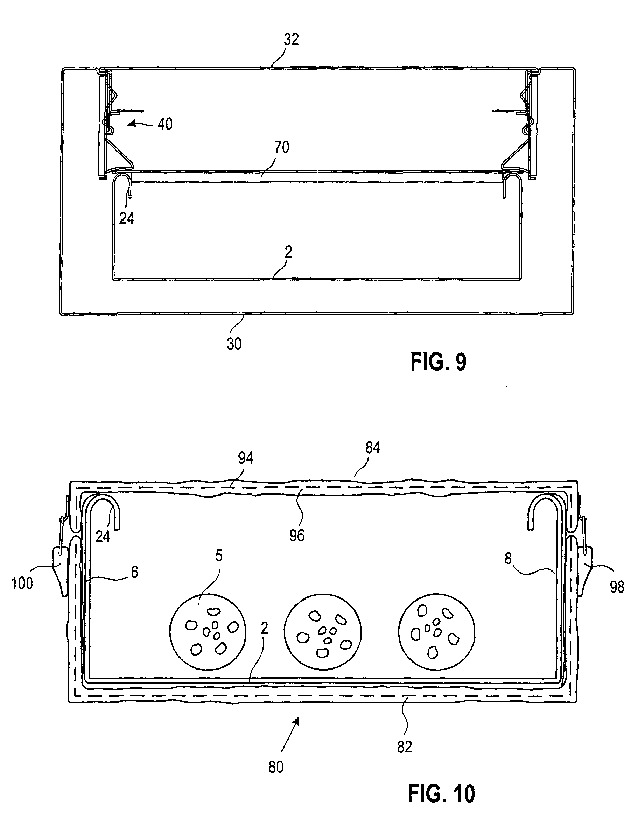

Fig. 9 zeigt eine Variante der Anordnung von Fig. 8, wobei die Kabelrinne 2 durch einen Deckel 70 abgeschlossen ist und somit einen geschlossenen Kabelkanal bildet. Es ist ersichtlich, daß sich eine Kabelführungseinrichtung, unabhängig davon, ob es sich um eine offene Kabelrinne oder einen geschlossenen Kabelkanal handelt, durch die erfindungsgemäße Brandschutzverkleidung problemlos brandsicher machen läßt.

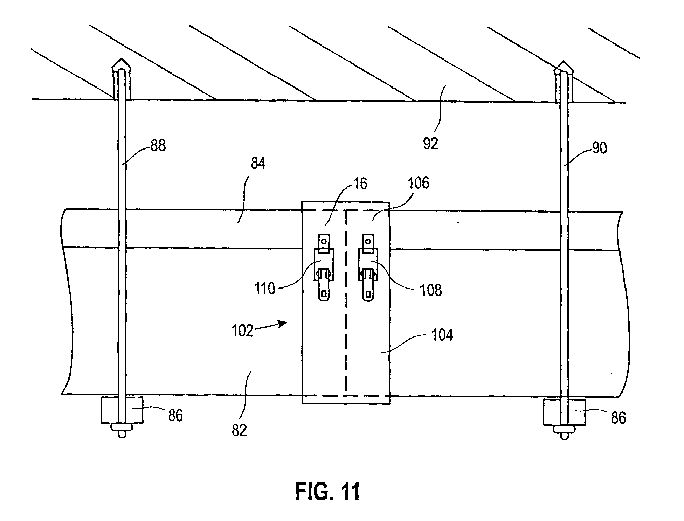

Die in Fig. 10 gezeigte Brandschutzverkleidung für eine Kabelrinne 2 besteht aus einem Deckelteil 84 und einem Unterteil 82. In der Kabelrinne 2 sind einige Kabel 5 schematisch dargestellt. Der Unterteil 82 liegt auf Trägern 86, die über Bolzen 88, 89, beispielsweise an einer Decke 92 befestigt sind, wie in Fig. 11 gezeigt ist.

Sowohl der Deckelteil 84 als auch der Unterteil 82 bestehen aus einem Verbundmaterial, das eine Metalleinlage aus einem mit Öffnungen versehenen Metallblech 94 und einen im Brandfall wärmedämmend und flammhemmend wirkenden Kunststoff 96 umfaßt. Die äußere und innere Kunststoffschicht ist über die Löcher zu einer einheitlichen Ummantelung für die Metalleinlage verbunden.

Die Verkleidungselemente lassen sich auf einfache Weise dadurch herstellen, daß eine mit Öffnungen versehene Metalleinlage gefertigt wird, daß die Metalleinlage mit einem unter Wärmeeinwirkung aufschäumenden Kunststoff zur Bildung eines Verbundmaterials beschichtet wird, und daß die Verkleidungselemente aus dem so gefertigten Verbundmaterial gefertigt bzw. aufgebogen werden. Wenn die Metalleinlage Öffnungen enthalten soll, können diese durch Stanzen eines Metallblechs oder durch Ankerben und anschließendes Strecken von Metallblech durch Kerb- und Streckwalzen hergestellt werden. Die Metalleinlage kann mit dem Kunststoff dadurch beschichtet werden, daß die Metalleinlage mit dem Kunststoff umspritzt wird, daß der Kunststoff auflaminiert wird oder daß die Metalleinlage in ein Bad mit dem Kunststoff eingetaucht wird. Die Verkleidungselemente können daher werksseitig konfektioniert werden, so daß sie am Bau nur noch montiert werden müssen.

Bei dem Ausführungsbeispiel von Fig. 10 ist der Deckelteil 84 mit dem Unterteil 82 durch Verbindungseinrichtungen 98, 100 verbunden, die in dem gezeigten Ausführungsbeispiel Kappenschlösser sind. An der Stoßstelle zwischen zwei Kabelkanalabschnitten ist eine Verbindungsmuffe 102 vorgesehen. In Fig. 11 ist eine Anschlußstelle bzw. eine Verbindungsmuffe 102 in Draufsicht dargestellt, wobei ersichtlich ist, daß die Verbindungsmuffe 102 aus einem Muffenunterteil 104 und einem Muffendeckel 106 besteht, die mit Kappenschlössern 108, 110 miteinander verbunden sind. Wie aus Fig. 11 zu ersehen ist, sind jeweils zwei Kappenschlösser 108, 110 auf jeder Seite der Verbindungsmuffe 102 vorgesehen. Die Verbindungsmuffe 102 stellt nicht nur den Anschluß zwischen zwei Kabelkanalabschnitten her, sondern hält auch den Deckelteil 84 der Brandschutzverkleidung auf dem Unterteil 82 der Brandschutzverkleidung fest.

Die Erfindung ist nicht auf die beschriebenen Ausführungsbeispiele beschränkt. So können beispielsweise auch die Unterteile aus den Figuren 1 bis 9 und die Deckelteile aus diesen Figuren aus Verbundmaterial bestehen.

Obwohl die Brandschutzplatten in den Figuren 2, 4, 8 und 9 nicht dargestellt sind, sind selbstverständlich auf der Innenseite der Unterteile und der Deckelteile entweder Platten aus Brandschutzmaterial oder eine Beschichtung aus Brandschutzmaterial vorgesehen. Auf die Befestigungseinrichtung kann anders gestaltet werden als im Zusammenhang mit den Ausführungsbeispielen beschrieben worden ist. Die Verbindungseinrichtung zwischen Unterteil und Deckelteil muß nur einfach zu bedienen und sollte lösbar sein.

## Patentansprüche

1. Brandschutzverkleidung für eine Kabelführungseinrichtung, insbesondere ein Kabelkanal oder eine Kabelrinne, **gekennzeichnet durch**:
- einen Unterteil (10, 30, 89), das wenigstens auf seiner Innenseite mit Brandschutzmaterial verkleidet ist und eine lichte Weite hat, die größer als die Außenabmessungen der Kabelführungseinrichtung (2) ist, **durch**:
- einen Deckelteil (12, 32, 84) zum Abdecken des Unterteils, und **durch**:
- eine Verbindungseinrichtung (14, 16; 40; 98, 100, 102) zwischen dem Unterteil und dem Deckelteil.

2. Brandschutzverkleidung nach Anspruch 1, **dadurch gekennzeichnet, daß** Platten (18, 20, 34, 36, 38) aus Brandschutzmaterial auf der Innenseite des Unterteils und des Dekkelteils vorgesehen sind.

3. Brandschutzverkleidung nach Anspruch 1, **dadurch gekennzeichnet, daß** auch die Außenseiten des Unterteils und des Deckelteils mit Brandschutzmaterial versehen sind.

4. Brandschutzverkleidung **dadurch gekennzeichnet, daß** der Brandschutzverkleidung aus einem Verbundwerkstoff gebildet ist, der aus einem nichtmetallischen Brandschutzmaterial (96) besteht, das mit einer Metalleinlage (94) verstärkt ist.

5. Brandschutzverkleidung nach einem der Ansprüche 1 bis 4, **dadurch gekennzeichnet, daß** das Brandschutzmaterial aus einem Kunststoff besteht, der unter Wärmeeinwirkung eine wärmeisolierende Dämmschicht ausbildet

6. Brandschutzverkleidung nach einem der vorherigen Ansprüche, **dadurch gekennzeichnet, daß** die Metalleinlage (94) aus mit Öffnungen versehenem Metallblech besteht.

7. Brandschutzverkleidung nach Anspruch 6, **dadurch gekennzeichnet, daß** die Öffnungen des Metallblechs durch das Brandschutzmaterial verschlossen sind.

8. Brandschutzverkleidung nach Anspruch 1, **dadurch gekennzeichnet, daß** die Verbindungseinrichtung zwischen dem Unterteil (10, 30) und der Kabelführungseinrichtung (2) und zwischen dem Unterteil und dem Deckelteil federnd einrastende, lösbare Federelemente (14, 16, 40) aufweist.

9. Brandschutzverkleidung nach Anspruch 8, **dadurch gekennzeichnet, daß** das Federelement (44) zum Verbinden des Unterteils mit der Kabelführungseinrichtung an der Innenseite des Unterteils derart angeordnet ist, daß es beim Aufsetzen des Unterteils auf die Kabelführungseinrichtung nach außen auslenkbar und beim Erreichen einer Endstellung des Unterteils gegenüber der Kabelführungseinrichtung nach innen einrastbar ist.

10. Brandschutzverkleidung nach Anspruch 8, **dadurch gekennzeichnet, daß** das Federelement (48) zum Verbinden des Deckelteils mit dem Unterteil an der Innenseite des Unterteils derart angeordnet ist, daß es beim Aufsetzen des Deckelteils auf den Unterteil nach außen auslenkbar und beim Erreichen einer Endstellung des Deckelteils gegenüber dem Unterteil nach innen einrastbar ist.

11. Brandschutzverkleidung nach einem der Ansprüche 8 bis 10, **dadurch gekennzeichnet, daß** ein weiteres Federelement (46) an dem Unterteil zur Fixierung des Deckelteils in seiner Endlage vorgesehen ist.

12. Brandschutzverkleidung nach einem der Ansprüche 8 bis 10, **dadurch gekennzeichnet, daß** die Federelemente auf einer an dem Unterteil befestigten Grundplatte (42) mit Öffnungen angeordnet sind, die die Auslenkung der Federelemente gestatten.
